# FASCICULE DE BREVET EUROPEEN

(11) **EP 2 852 521 B1**
(45) Date de publication et mention de la délivrance du brevet: **24.02.2016**
(21) Numéro de dépôt: 13727275.3
(22) Date de dépôt: 13.05.2013
(51) Int. Cl.: B62D 59/04

(54) **MACHINE TRACTÉE MUNIE D'UN DISPOSITIF D'ATTELAGE DÉPORTÉ**
ANHÄNGER MIT EINER DEPORTIERTEN ANSPANNENVORRICHTUNG
TOWED MACHINE FITTED WITH AN OFFSET HITCH DEVICE

(30) Priorité: 22.05.2012 FR 1201441
(43) Date de publication de la demande: 01.04.2015
(73) Titulaire: PELLENC (Société Anonyme), 84120 Pertuis (FR)
(72) Inventeur: ROLLAND, Christian, F-84160 Cucuron (FR)
(74) Mandataire: Marek, Pierre
(86) Numéro de dépôt international: PCT/FR2013/051037
(87) Numéro de publication internationale: WO 2013/175097

(56) Documents cités:
- DE-A1-102004 037 565
- DE-C1- 3 616 457
- FR-A1- 2 572 352
- FR-A1- 2 611 611
- FR-A1- 2 709 280
- FR-A1- 2 747 006

## Description

La présente invention concerne le domaine des machines tractées munies d'un dispositif d'attelage déporté. Elle vise plus particulièrement les machines agricoles enjambeuses pourvues d'un dispositif d'attelage permettant de les atteler de manière déportée à l'arrière d'un engin tracteur automoteur, par exemple constitué par un tracteur agricole. De telles machines sont couramment utilisées pour les cultures en ligne, l'engin tracteur circulant dans l'interligne entre les rangs de ces cultures alors que la machine tractée travaille, de manière déportée, sur le rang de culture, par exemple pour la récolte de petits fruits. Ces machines se positionnent derrière l'engin tracteur, sensiblement dans l'axe de ce dernier, lorsque celui-ci se déplace sur des voies de circulation.

La présente invention peut également être appliquée à des machines tractées effectuant d'autres travaux agricoles, des travaux publics, de voirie, des travaux forestiers, etc.

Elle s'applique, en particulier aux machines tractées dont les organes travaillant sont actionnés par une source de puissance énergétique constituée par des moyens hydrauliques, ou par des moyens électriques, comprenant une centrale hydraulique et/ou électrique installée sur lesdites machines, lesquelles peuvent être attelées à l'arrière d'un engin tracteur, en ligne avec ledit engin pour la traction en mode route et avec un déport latéral pour la traction en mode culture, au moyen d'un dispositif d'attelage. Ce dispositif d'attelage comprend un bras de traction ou timon mécanique fixé par l'intermédiaire de moyens de pivotement sur la machine tractée, et dont l'autre extrémité est apte à être fixée par l'intermédiaire d'un dispositif normalisé à l'arrière dudit engin tracteur, avec une possibilité de pivotement par rapport à ce dernier. D'autre part, un dispositif de transmission relié à la source de puissance énergétique, installée à la partie avant de la machine tractée, par l'intermédiaire de son extrémité postérieure, peut être accouplée à la prise de force de l'engin tracteur, par l'intermédiaire de son extrémité avant pour permettre la transmission d'une forte puissance de travail aux différents organes actifs de ladite machine tractée.

Dans l'application au machinisme agricole, les machines enjambeuses tractées telles que, par exemple, les machines à vendanger du genre le plus couramment utilisé aujourd'hui, comprennent un châssis porteur en forme de portique, supporté par des roues dont certaines peuvent être motrices et sur lequel est fixé un équipement conçu pour exécuter un travail spécifique comme par exemple un système de secouage pour récolter la vendange. Cet équipement pourrait être constitué par d'autres systèmes nécessitant l'enjambement du rang, tel qu'une tête de coupe de machine de prétaillage par exemple. De telles machines enjambeuses tractées connues comprennent également une centrale hydraulique comportant un groupe pompe-multiplicateur fournissant l'énergie hydraulique pour assurer le fonctionnement des organes actifs de leurs équipements et, dans certains cas, pour réaliser aussi l'entraînement d'une ou de plusieurs roues motrices.

En cours de travail dans une plantation, ces machines tractées enjambent la haie fruitière constituée par le rang d'arbres ou d'arbustes fruitiers (rang de vignes, rang d'oliviers, ...). Elles sont attelées à un engin tracteur au moyen d'un dispositif d'attelage et on comprend que l'on ne peut utiliser, pour ce travail, un dispositif d'attelage classique disposé dans l'alignement des axes du tracteur et de la machine tractée, et donc centré au niveau de la machine tractée sur le rang de culture. Le dispositif d'attelage sur la machine tractée ne peut ainsi être fixé dans ce cas que sur un côté de la machine du côté de l'engin tracteur. Ainsi, en position route, même si les axes du tracteur et celui de la machine tractée sont quasiment alignés en avancement sur une ligne droite, on comprend que le dispositif d'attelage ne peut être aligné avec cet axe compte tenu de son point d'ancrage latéral sur la machine tractée.

Il est connu (FR-2.709.280) d'installer la centrale hydraulique sur un bâti distinct ou indépendant du châssis de la machine tractée et comportant, d'une part, à l'avant, des moyens d'attache permettant de le monter fixement à l'arrière d'un engin tracteur tel qu'un tracteur agricole, par exemple par l'intermédiaire d'une fixation à trois points connue en soi, et, d'autre part, à l'arrière, un organe d'attelage permettant de le relier au timon mécanique de la machine tractée. D'autre part, la prise de force du tracteur peut être accouplée à l'arbre d'entrée de la centrale hydraulique par l'intermédiaire d'une transmission courte à joints de Cardan simples compte tenu de l'alignement fixe de la centrale par rapport au tracteur quelle que soit la phase de fonctionnement.

Ce dispositif a notamment pour inconvénients :
- la présence de longs câbles et tuyaux hydrauliques pour transmettre la puissance et les commandes entre la centrale hydraulique ou l'engin tracteur vers les organes actifs situés sur la structure de la machine tractée, ces câbles et tuyaux sont en effet encombrants et gênants en position de travail, lorsque les cultures sont constituées par des haies fruitières où ils s'accrochent souvent au matelas végétal, et plus particulièrement dans les tournières en bout de ligne de culture générant un risque de détérioration et d'éclatement de ceux-ci ;
- le timon étant fixé en position basse de la centrale hydraulique du côté de l'engin tracteur, il limite le franchissement de terrains difficiles, par exemple la traversée d'un ruisseau, car il peut générer des efforts importants, voire des endommagements au niveau de la centrale hydraulique ;
- l'installation de la centrale hydraulique à l'arrière du tracteur et sa liaison avec le timon de la machine est assez difficile et nécessite un temps relativement long ; il en va de même pour sa dépose ;
- la nécessité d'utiliser plusieurs personnes pour réaliser cette installation et cette dépose, car elle peut s'avérer dangereuse pour un homme seul ;
- la nécessité de prévoir des moyens lourds de fixation de la centrale hydraulique sur l'arrière du tracteur et des tuyaux hydrauliques longs et chers lorsque ceux-ci sont dimensionnés pour transmettre beaucoup de puissance sur une pluralité d'actionneurs hydrauliques distincts disposés au sein de la machine tractée, rendant ce système coûteux à fabriquer.

Sont aussi connues, des machines tractées telles que celle décrite dans FR-2.611.611 possédant une centrale hydraulique positionnée sur ladite machine tractée. Le dispositif d'attelage utilisé dans ce cas pour relier le tracteur à la machine tractée comprend, d'une part, un timon mécanique solidaire de la partie frontale de la machine tractée, centré sur l'axe de celle-ci, et relié par l'intermédiaire d'organes de liaison normalisés à l'engin tracteur et, d'autre part, un arbre de transmission reliant, au moyen de joints de Cardan, la prise de force du tracteur et l'arbre d'entrée d'une centrale hydraulique fixée sur la machine tractée, cet arbre assurant l'entraînement des différents organes hydrauliques de la machine tractée.

L'angle de braquage que l'on peut obtenir par l'application du dispositif d'attelage reliant l'engin tracteur à la machine tractée, et sommairement décrits dans le document susmentionné, est très insuffisant pour permettre l'utilisation d'un tel dispositif pour l'attelage à un engin tracteur d'une machine tractée en position déportée par rapport à l'axe de déplacement dudit tracteur pour enjamber le rang de culture.

Dans ce cas, le fait que l'arbre de transmission à joints de Cardan pourrait, au moins théoriquement, être amené à se trouver incliné avec des angles importants en cours de travail, par exemple des angles d'inclinaison supérieurs à 25°, ne permettrait pas la transmission en continu de puissances importantes qui ne seraient pas, en effet, supportées durablement par les joints de Cardan, sans risque d'endommagement ou de rupture de ces derniers, qui sont des organes fragiles. On sait, en effet, que si un arbre moteur tourne à vitesse uniforme, l'arbre mené accouplé audit arbre moteur au moyen d'un joint de Cardan tourne à une vitesse variable, lorsque ces arbres ne sont plus alignés, cette variation étant d'autant plus importante que l'angle formé par lesdits arbres est plus grand, cette variation de vitesse est génératrice de vibrations et de fatigue dudit joint de Cardan, en particulier à grande vitesse de rotation.

On connait toutefois des machines tractées comportant des dispositifs de traction et de transmission mécaniques fonctionnant avec un déport important par rapport à l'axe de l'engin tracteur. Une telle machine est par exemple décrite dans le document FR-2.747.006. Ce dispositif comporte un timon primaire lié au dispositif d'attelage et à la prise de force de l'engin tracteur, et un timon secondaire lié au corps de la machine tractée, l'ensemble incorporant un dispositif mécanique de traction et de transmission, ce dernier étant constitué par une succession d'une pluralité de bras ou organes de transmissions à joints universels notamment, permettant le travail de la machine tractée en position déportée selon des positions prédéfinies. Les axes de pivotement sur le corps de la machine tractée du système de transmission et du système de liaison situés sur l'axe médian de ladite machine, sont fixes par rapport au corps de ladite machine tractée et distants l'un de l'autre, de façon à permettre le positionnement de la machine tractée dans l'une quelconque de ses différentes positions de travail au moyen d'un organe de manoeuvre mécanique permettant de faire pivoter le bras de transmission par rapport au corps de la machine et entrainant le pilotage de façon proportionnelle de l'axe de transmission de ladite machine. Ce dispositif de traction et de transmission mécanique a pour inconvénients d'être encombrant, lourd, d'être constitué par une quantité importante de pièces et reste une solution chère si l'on doit mouvoir les organes actifs de la machine tractée par une énergie hydraulique ou électrique.

En position de traction de la machine sur route, on comprend qu'il est souhaitable que les moyens de traction et de transmission soient alignés avec l'axe de l'engin tracteur et avec celui de la machine tractée, du fait de la fixation médiane des axes de traction et de transmission sur le corps de ladite machine. Ce n'est pas le cas de la machine décrite dans le document FR-2.709.280 dont l'axe de pivotement du moyen de traction sur le corps de la machine est positionné sur l'un des côtés de ladite machine compte tenu notamment de sa hauteur et de son mode de travail en ligne de culture. Ainsi, l'application en position de travail déportée d'une seule transmission mécanique à joints universels disposée entre la prise de force de l'engin tracteur et la pompe hydraulique située sur une telle machine accentuerait encore l'angle de travail de ladite transmission qui ne peut accepter dans cette configuration une puissance transmise importante sans risque de dégradation rapide de ladite transmission. Cet inconvénient est de plus accentué par la longueur nécessaire de ladite transmission.

Afin de remédier aux différents problèmes susmentionnés, la déposante a créé une machine agricole enjambeuse tractée comprenant un dispositif d'attelage de traction et de transmission, et des organes de travail animés par l'intermédiaire d'une source de puissance énergétique installée sur ladite machine. Cette machine est appelée à être attelée à l'arrière d'un engin tracteur, de manière déportée par rapport à l'axe de déplacement de ce dernier, par l'intermédiaire d'un dispositif d'attelage comprenant, d'une part, un timon mécanique, solidaire de la partie avant de la machine tractée et ayant une possibilité de pivotement par rapport à celle-ci et dont l'autre extrémité est destinée à être attelée, par exemple au moyen d'un dispositif normalisé, sur la partie arrière dudit engin tracteur avec des aptitudes de pivotement par rapport à ce dernier et, d'autre part, un unique arbre de transmission télescopique homocinétique à joints universels, par exemple à joints de Cardan, dont l'une des extrémités est reliée à l'arbre d'entrée de la source de puissance énergétique, et dont l'autre extrémité est destinée à être reliée à la prise de force de l'engin tracteur, ledit dispositif d'attelage étant notamment en outre remarquable en ce que ledit unique arbre de transmission et ledit timon mécanique peuvent occuper, en situation de travail, des positions inclinées et indépendantes l'une de l'autre et formant des angles variables avec les axes de déplacement de la machine et/ou de l'engin tracteur, avec une amplitude pouvant atteindre 90 degrés entre les positions extrêmes constituées par la position de traction en mode route, d'une part, et la position de traction en mode culture avec un déport maximal, d'autre part.

Selon une autre disposition caractéristique, le bras de transmission du dispositif d'attelage a une longueur réglable, ce bras étant par exemple, constitué de deux tronçons de bras assemblés de manière télescopique.

Plus précisément, l'invention vise le dispositif d'attelage d'une machine tractée attelée à un engin tracteur permettant de déporter la machine tractée, en position de travail, avec un grand déport défini par une inclinaison importante de l'axe de traction de ladite machine par rapport à l'axe dudit engin tracteur, tout en limitant l'inclinaison du bras de transmission à une valeur angulaire apte à garantir les conditions de bon fonctionnement dudit bras de transmission.

Suivant une autre importante disposition caractéristique, la machine est remarquable par un agencement de son dispositif d'attelage suivant lequel, l'inclinaison du bras de transmission est assujettie à la position angulaire du timon et à la puissance consommée par les organes actifs de la machine, au moyen d'un système d'asservissement configuré pour qu'en cours de fonctionnement, l'angle maximum d'inclinaison possible du bras de transmission permettant son bon fonctionnement puisse être très nettement inférieur à l'angle maximum d'inclinaison possible du timon. Plus précisément, ce système d'asservissement est configuré pour assurer le maintien du bras de transmission dans une position d'inclinaison réduite selon un angle inférieur à l'angle d'inclinaison du timon d'attelage, lorsque les axes du tracteur et de la machine tractée sont espacés et parallèles et que les organes actifs de cette dernière fonctionnent en utilisant une puissance énergétique importante.

Selon l'invention, la source de puissance énergétique peut être constituée par un groupe pompe-multiplicateur d'une centrale hydraulique et/ou par un alternateur électrique.

Selon une autre disposition caractéristique, la source de puissance énergétique est montée avec une inclinaison ou possibilité de mouvements angulaires variable(s) et d'amplitude limitée autour d'un axe sensiblement vertical, sur la machine tractée, pour limiter l'amplitude angulaire de l'arbre de transmission, par rapport à celle du timon, dont l'une de ses deux extrémités est reliée à l'axe d'entrée de ladite source de puissance énergétique.

Selon une autre disposition caractéristique, les points de pivot du bras de transmission coïncident sensiblement avec les points d'accrochage du timon.

Selon une autre importante disposition caractéristique, le système d'asservissement permettant de limiter l'inclinaison du bras de transmission relativement à l'inclinaison du timon, comprend au moins un capteur permettant de détecter l'inclinaison dudit timon et au moins un actionneur agissant sur l'inclinaison de la source de puissance énergétique pour permettre d'incliner ledit bras de transmission en fonction des informations fournies par ledit capteur.

Selon une autre importante disposition caractéristique, la source de puissance énergétique est montée sur un support pivotant autour d'un axe vertical et les mouvements de pivotement de ce support, à droite ou à gauche, dans le plan horizontal, sont assurés par un actionneur, de préférence constitué par un vérin hydraulique reliant ledit support pivotant et une pièce d'attache fixe du châssis de la machine.

Selon une autre disposition caractéristique, la machine comporte un système de gestion électronique configuré pour gérer l'asservissement de l'inclinaison de la source de puissance énergétique, en fonction de l'inclinaison du timon détectée par au moins un capteur, et des puissances absorbées par les différents organes actifs de la machine.

Selon une caractéristique intéressante, le système de gestion électronique comprend au moins une unité de traitement numérique associée à des circuits annexes permettant de commander la rotation de la source de puissance énergétique autour de son axe de pivotement lié au châssis de la machine, de sorte à maintenir le bras de transmission dans les plages angulaires autorisées pour son fonctionnement en fonction de la position angulaire du timon et de la puissance utilisée par les organes actifs en fonctionnement sur la machine.

Selon une autre caractéristique de l'invention, le système de gestion électronique est configuré pour :
- assurer la superposition ou le parallélisme du timon d'attelage et du bras de transmission, lorsque les axes du tracteur et de la machine sont alignés, ou lorsque les axes dudit tracteur et de ladite machine sont espacés et parallèles mais que les organes actifs de cette dernière ne fonctionnent pas ou utilisent une puissance énergétique faible ;
- assurer le maintien du bras de transmission dans une position d'inclinaison réduite selon un angle inférieur à l'angle d'inclinaison du timon d'attelage, lorsque les axes du tracteur et de la machine sont espacés et parallèles et que les organes actifs de cette dernière fonctionnent en utilisant une puissance énergétique importante ;
- replacer le bras de transmission dans l'axe du timon lorsque la puissance totale utilisée par les dispositifs actifs de la machine redevient nulle ou suffisamment réduite pour ne pas favoriser un risque de dégradation des joints dudit bras de transmission.

Selon un mode de mise en oeuvre, le timon est relié à la partie avant du châssis de la machine avec une possibilité de pivotement autour de deux axes perpendiculaires, et en ce que les mouvements de pivotement du timon sont assurés, d'une part, par l'intermédiaire d'un premier actionneur et, d'autre part, par l'intermédiaire d'un deuxième actionneur.

Selon un mode de réalisation, le timon est relié à la machine par l'intermédiaire d'un support en forme de U basculé ou de fourche, lequel est monté avec une aptitude de pivotement autour d'un axe vertical.

La machine tractée selon l'invention procure plusieurs avantages intéressants. Notamment :
- la possibilité d'un grand déport de la machine tractée, même dans le cas de transmission de puissances importantes, tout en conservant une inclinaison réduite du bras de transmission permettant de respecter les caractéristiques ou paramètres d'un bon fonctionnement de ladite transmission, et allongeant la durée de vie de cette dernière ;
- l'absence de tuyaux entre le tracteur et la machine tractée, et, par conséquent, la suppression du risque d'accrochage de tels tuyaux aux branches des haies fruitières qui pourrait endommager la végétation et/ou la machine ;
- un meilleur franchissement de l'attelage dans les zones difficiles, évitant l'endommagement des parties sensibles de la machine ;
- la facilité et la rapidité d'attelage et de dételage de la machine tractée à l'engin tracteur d'où une réduction sensible du temps habituellement consacré à ces opérations ;
- la possibilité d'application de l'invention aussi bien aux machines dont la source de puissance énergétique est constituée par un groupe pompe multiplicateur d'une centrale hydraulique, qu'aux machines dont la source de puissance énergétique est constituée par un alternateur électrique ;
- des coûts de production plus faibles et un nombre de pièce limité à l'extrême pour une transmission ayant pour objectif l'alimentation d'une source de puissance énergétique sur une machine tractée.

On prévoit une application très avantageuse de l'invention aux machines agricoles tractées chevauchant des lignes de cultures, fonctionnant dans un axe fortement déporté de celui de l'engin tracteur, du genre comportant une unité de travail dont la puissance et la variété des fonctions utilisées sur la machine nécessitent la mise en place d'une source de puissance énergétique et du genre comportant une unité de travail montée sur roues et comprenant un équipement dédié à l'accomplissement d'une tâche spécifique, telles que machines de prétaillage de la vigne et plus particulièrement aux machines de récolte de petits fruits (raisins, olives, etc.). L'invention est aussi applicable aux machines de récolte du foin ou autres herbacées. En outre, il est rappelé que la machine selon l'invention peut aussi être appliquée à des usages non agricoles.

Les buts, caractéristiques et avantages ci-dessus, et d'autres encore, ressortiront mieux de la description détaillée qui suit et des dessins annexés dans lesquels :
- la figure 1 est une vue en plan et à caractère schématique montrant une machine agricole attelée à un engin tracteur à l'aide du dispositif de l'invention et représentée dans une position de circulation sur route ;
- la figure 2 est une vue de détail, à plus grande échelle, de la figure 1 ;
- la figure 3 est une vue analogue à la figure 1, représentant la machine dans une position selon laquelle cette dernière est déportée par rapport à l'axe de circulation du tracteur et se trouvant à l'une des extrémités d'une haie fruitière, avant chevauchement de celle-ci ;
- la figure 4 est une vue de détail et à plus grande échelle, de la figure 3 ;
- la figure 5 est une vue en plan analogue à la figure 1 et à caractère schématique de la machine enjambeuse représentée en position de travail suivant laquelle elle se déplace en chevauchant une haie fruitière, tandis que le tracteur circule dans l'inter-rangs ou espace ménagé entre deux haies fruitières parallèles ;
- la figure 6 est une vue de détail, à plus grande échelle, de la figure 5 ;
- la figure 7 est une vue de côté de la figure 6 ;
- la figure 8 est une vue en plan et à caractère schématique représentant l'ensemble "tracteur-machine" lors de l'amorce d'un virage à droite en bout de rang ;
- la figure 9 est une vue de détail, à échelle agrandie, de la figure 8 ;
- la figure 10 est une-vue en plan et à caractère schématique représentant l'ensemble "tracteur-machine" lors d'un virage à gauche ;
- la figure 11 est une vue en plan et à caractère schématique représentant l'ensemble "tracteur-machine" lors d'un virage à gauche d'amplitude plus importante, par rapport à la figure 10.

On se réfère auxdits dessins pour décrire un exemple intéressant quoique nullement limitatif, de réalisation du dispositif d'attelage déporté selon l'invention.

Dans le présent exposé, et dans les revendications, les mots "avant" et "postérieur" sont utilisés en référence au sens de circulation de la machine, tandis que les mots "supérieur", "inférieur", "horizontal" et "vertical" sont employés en référence à la position neutre de la machine lorsqu'elle stationne sur une aire horizontale.

Il est précisé que l'expression « machines tractées » désigne, dans le langage professionnel, des machines qui peuvent être attelées à l'arrière d'un engin tracteur.

On entend par l'expression « source de puissance énergétique », le dispositif comprenant les organes nécessaires pour transformer la puissance mécanique issue du tracteur en puissance hydraulique ou électrique.

De plus, il est rappelé que dans le présent exposé et dans les revendications, le déport considéré pour cette machine est constitué par la distance entre l'axe de l'engin tracteur et l'axe de ladite machine en position de travail, parallèle à celui de l'engin tracteur.

La machine tractée selon l'invention comprend une unité de travail désignée, dans son ensemble, par la référence 1, cette unité de travail étant supportée par une ou plusieurs roues 2. Cette unité de travail est munie d'un équipement (non représenté) dédié à l'accomplissement d'une tâche spécifique et porté par un châssis 3, lequel est d'un type enjambeur dans l'application de l'invention aux machines agricoles appelées à se déplacer en chevauchant les haies fruitières dans ces plantations, par exemple constituées de rangs espacés et parallèles d'arbustes ou arbres produisant des petits fruits tels que vignes ou oliviers, etc. Cet équipement comprend des organes actifs correspondant à la destination de la machine. Selon une application particulièrement visée par l'invention aux machines de récolte de petits fruits produits par des arbres ou arbrisseaux cultivés en rangées parallèles, ces organes actifs seront, par exemple, constitués par les bras de battage d'un système de secouage.

On souligne cependant que les organes actifs d'une machine destinée à la taille ou au prétaillage pourront être constitués par des outils de coupe.

Une source de puissance énergétique 4 est installée sur ladite machine, de préférence à l'avant de cette dernière.

De manière connue en soi, une ou plusieurs roues 2 de la machine peut (peuvent) être motrice(s) ; dans ce cas, la source de puissance énergétique assure également l'entrainement en rotation de la ou des roues motrices en sus de l'alimentation des organes actifs de la machine.

Cette source de puissance énergétique 4 peut être constituée par une centrale hydraulique comportant un groupe pompe-multiplicateur 16, cet ensemble assurant le fonctionnement des organes actifs de la machine, y compris, le cas échéant, l'entraînement d' une ou de plusieurs roues motrices 2 et la commande des actionneurs permettant le positionnement de la machine par rapport à l'engin tracteur, et donc assurant le positionnement angulaire du timon et du bras de transmission.

Alternativement, la source de puissance énergétique pourrait être constituée par un alternateur fournissant le courant électrique aux différents organes actifs susmentionnés de la machine.

Dans la suite du présent exposé, il est décrit un exemple de réalisation selon lequel les organes actifs de la machine tractée sont constitués par des dispositifs à fonctionnement hydraulique et dont la source de puissance énergétique est constituée par une centrale hydraulique comportant un groupe pompe-multiplicateur. Toutefois, ladite description peut être transposée de manière identique à une machine tractée dont les organes actifs sont constitués par des dispositifs à fonctionnement électrique, et dont la source de puissance énergétique est constituée par un alternateur électrique. Selon encore une autre alternative, la source de puissance énergétique comprend une centrale hydraulique et un alternateur électrique.

De manière connue en soi, la machine comprend encore un dispositif d'attelage positionné à l'avant de son châssis et comportant principalement un timon 5 et une transmission 6 reliée à ladite source de puissance énergétique 4 et dont l'extrémité avant est destinée à être accouplée à la prise de force de l'engin tracteur T.

L'extrémité avant du timon 5 et l'extrémité arrière de l'engin tracteur T, sont munies, respectivement, des organes complémentaires d'un système de liaison normalisé, permettant de fixer, avec une aptitude de pivotement et de manière connue en soi, la machine au tracteur, de façon aisément attelable et dételable.

D'autre part, l'extrémité arrière du timon 5 est fixée à la partie avant du châssis 11 de la machine, également de manière connue en soi, avec une aptitude de pivotement.

Le timon 5 est relié à la machine 1 par l'intermédiaire d'un support en forme ce U basculé ou de fourche 9, lequel est monté avec une aptitude de pivotement autour d'un axe vertical.

Le timon 5 est avantageusement relié à la partie avant du châssis de la machine avec une possibilité de pivotement autour de deux axes perpendiculaires A'-A' et A" -A" et les mouvements de pivotement du timon 5 sont assurés, d'une part, par l'intermédiaire d'un premier actionneur 22 et, d'autre part, par l'intermédiaire d'un deuxième actionneur 23.

La machine comprend encore, de manière connue en soi, des moyens de contrôle et de commande, préférentiellement constitués par un boitier à commandes électriques déporté, positionné à portée de mains du conducteur de l'engin tracteur, et relié à un boitier électronique disposé sur la machine tractée. Ces moyens permettent de contrôler et de commander les différentes fonctions de la machine et notamment le déport de celle-ci, par le positionnement angulaire du timon 5, au moyen d'actionneurs hydrauliques et/ou électriques connus en soi, tels que des vérins, selon un angle quelconque entre l'axe dudit timon et l'axe de l'engin tracteur, angle compris entre deux positions extrêmes définies, respectivement, par un mode de travail en déport maximal et un mode « route » pour maintenir la machine dans la position choisie.

Selon l'invention, la transmission 6 est constituée par un unique bras de transmission télescopique homocinétique à joints universels.

L'extrémité avant du bras de transmission 6 équipée d'un joint de Cardan avant 12 est destinée à être accouplée, de façon connue en soi, à la prise de force du tracteur T.

Selon une importante disposition caractéristique de l'invention, l'arbre 26 reliant le Cardan postérieur 15 équipant l'extrémité postérieure du bras de transmission à joints de Cardan 6, à l'arbre d'entrée du groupe pompe-multiplicateur 16 est monté avec une inclinaison ou possibilité de mouvements angulaires variable(s) et d'amplitude limitée.

D'autre part, ledit timon mécanique 5 peut occuper, en situation de travail, des positions inclinées formant des angles variables avec les axes de déplacement de la machine et/ou de l'engin tracteur, avec une amplitude pouvant atteindre 90 degrés entre les positions extrêmes constituées par la position route d'une part, et la position en mode « culture » (ou position de travail) avec le maximum de déport, d'autre part.

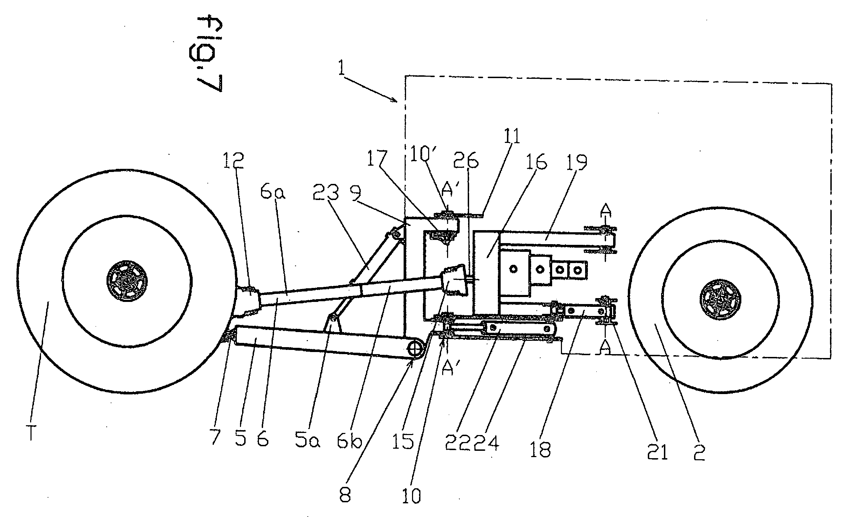

De manière avantageuse, l'arbre 26 reliant le Cardan postérieur 15 du bras de transmission à joints de Cardan 6 à l'axe d'entrée du groupe pompe-multiplicateur 16 est monté avec une aptitude de pivotement autour d'un axe vertical A-A (figure 7).

Le bras de transmission 6 a une longueur variable. Il est, par exemple, constitué de deux tronçons 6a, 6b assemblés de manière télescopique, de façon connue en soi, pour absorber les variations de distances en fonction du déport de la machine.

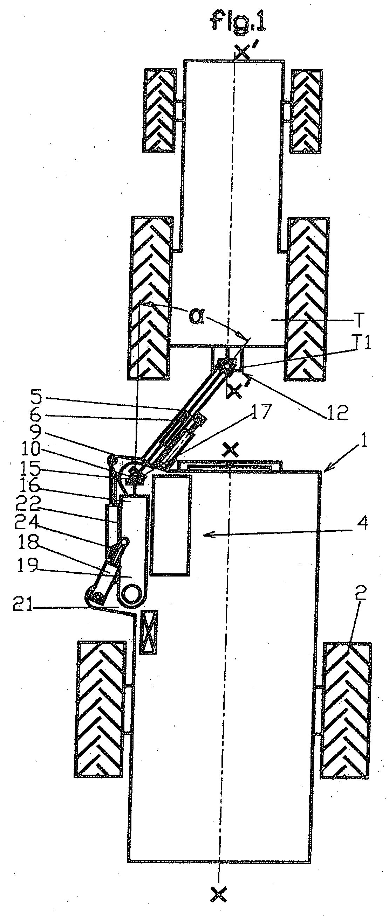

Selon une caractéristique intéressante de l'invention, en mode route (figure 1), les points de pivot du bras de transmission 6 coïncident sensiblement avec les points d'accrochage du timon 5, d'une part, à l'extrémité arrière du tracteur T et, d'autre part, à la partie avant du châssis 11 de la machine 1.

Plus précisément, l'inclinaison du bras de transmission à joints de Cardan 6, est assujettie à la position angulaire du timon 5 et à la puissance consommée par le nombre d'organes actifs de la machine, au moyen d'un système d'asservissement configuré pour que, lorsque la machine est attelée à l'engin tracteur T et en cours de fonctionnement, l'angle maximum d'inclinaison possible α du bras de transmission soit très nettement inférieur à l'angle maximum d'inclinaison possible β du timon 5.

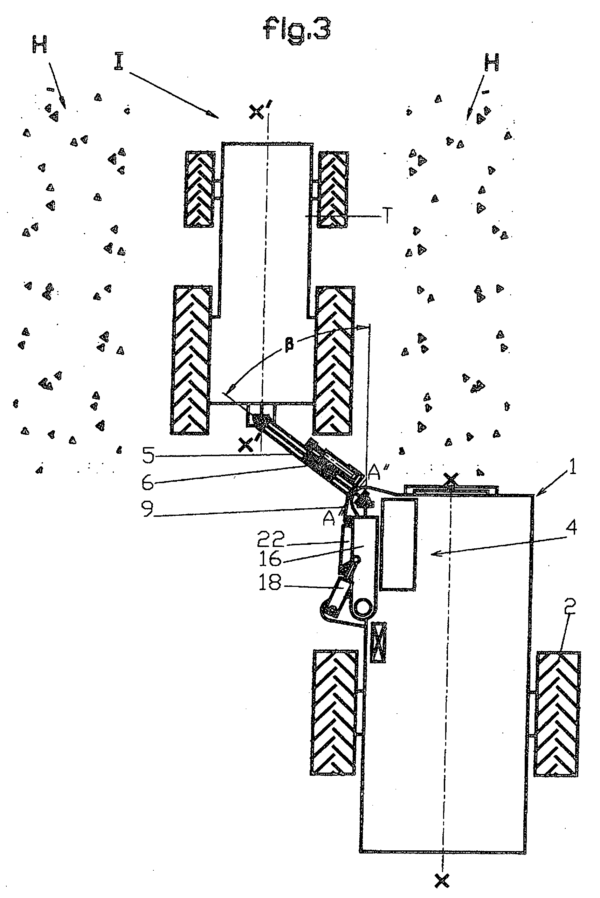

D'autre part, lorsque la machine est déportée mais que peu de fonctions (c'est-à-dire des organes de travail) sont activées sur la machine (figure 3), c'est-à-dire lorsque la puissance transmise reste dans une limite relativement faible, par exemple de l'ordre de 20% de la puissance maximale en fonctionnement, le bras de transmission 6 peut être ramené sur l'axe du timon de façon à faciliter les manoeuvres, par exemple en virage, de l'ensemble constitué par l'engin tracteur et la machine tractée.

Toutefois, lorsqu'une majorité des organes de travail de la machine tels que les secoueurs, les convoyeurs, ..., dans le cas d'une machine de récolte, sont activés, la puissance transmise par le bras de transmission ne pourra supporter un fonctionnement de longue durée avec un déport important de la machine et un bras de transmission positionné dans l'axe du timon. Dans ce cas, des moyens sont prévus pour limiter l'inclinaison du bras de transmission afin que le positionnement de ce dernier autorise son bon fonctionnement. De tels moyens sont décrits ci-après.

Le système d'asservissement de l'inclinaison du bras de transmission 6 à joints de Cardan à l'inclinaison du timon 5, comprend au moins un capteur angulaire 17 porté par le châssis de la machine 1 et permettant de détecter l'inclinaison dudit timon, et au moins un actionneur 18 permettant d'incliner le groupe pompe-multiplicateur 16 , et, par conséquent, également l'arbre 26, en fonction des informations fournies par ledit capteur.

Le groupe pompe-multiplicateur 16 est monté sur un support pivotant 19 autour d'un axe vertical, et, les mouvements de pivotement de ce support, et, par conséquent, les déplacements angulaires variables de l'arbre 26 à droite ou à gauche, dans le plan horizontal, sont assurés par l'actionneur 18. De préférence, ledit actionneur 18 est constitué par un vérin hydraulique reliant ledit support pivotant 19 et une pièce d'attache fixe 21 solidaire du châssis de la machine.

L'amplitude des mouvements angulaires dudit arbre 26 est limitée par le vérin 18 commandé par le système de gestion électronique assurant la gestion des mouvements de l'attelage. Les mouvements de pivotement du timon 5 sont assurés, d'une part, par l'intermédiaire d'un premier actionneur 22 et, d'autre part, par l'intermédiaire d'un deuxième actionneur 23. De manière préférée, le premier actionneur 22 est constitué par un vérin hydraulique relié au support pivotant 9 et à une pièce d'attache fixe 24 solidaire du châssis de la machine, tandis que le deuxième actionneur 23 est constitué par un vérin hydraulique, relié audit support pivotant 9 et à une patte d'attache 5a dont est muni ledit timon 5 dans sa partie intermédiaire.

Le système de gestion électronique comprend au moins une unité de traitement numérique associée à des circuits annexes permettant de commander la rotation du groupe pompe-multiplicateur autour de son axe de pivotement lié au châssis de la machine, de sorte à maintenir le bras de transmission 6 dans les plages angulaires autorisées pour son fonctionnement en fonction de la position angulaire du timon 5 et de la puissance utilisée par les dispositifs en fonctionnement sur la machine.

Ainsi, le système électronique de commande écarte le groupe pompe-multiplicateur dans une position déterminée vers l'extérieur de la machine dès que le timon 5 commandé vers une position de travail dépasse un seuil angulaire prédéfini depuis une position angulaire minimale définie par le mode route, et que la puissance totale utilisée par les dispositifs en fonctionnement sur la machine est supérieure à un seuil déterminé, pour assurer le positionnement du bras de transmission 6 dans une position angulaire permettant son bon fonctionnement, dans le cas d'une puissance importante transmise en continu. De la sorte, les joints universels sont moins sollicités et leur durée de fonctionnement optimum s'en trouve prolongée.

De même, le système de gestion électronique de commande ramène le bras de transmission 6 sensiblement dans l'axe du timon 5, par le pivotement du groupe pompe-multiplicateur, dès que la puissance totale utilisée par les dispositifs en fonctionnement sur la machine est suffisamment réduite pour être transmise en continu, selon l'angle de positionnement du timon, pour favoriser les manoeuvres de la machine tractée.

Le système de gestion électronique est donc configuré pour :
- assurer la superposition ou le parallélisme du timon d'attelage 5 et du bras de transmission 6, lorsque les axes du tracteur T et de la machine 1 sont alignés, ou lorsque les axes dudit tracteur et de ladite machine sont espacés et parallèles, mais que les organes actifs de cette dernière ne fonctionnent pas ou utilisent une puissance énergétique faible ;
- assurer le maintien du bras de transmission 6 dans une position d'inclinaison réduite selon un angle inférieur à l'angle d'inclinaison du timon d'attelage 5, lorsque les axes du tracteur T et de la machine 1 sont espacés et parallèles et que les organes actifs de cette dernière fonctionnent en utilisant une puissance énergétique importante ;
- replacer le bras de transmission 6 dans l'axe du timon 5 lorsque la puissance totale utilisée par les dispositifs actifs de la machine 1 redevient nulle ou suffisamment réduite pour ne pas favoriser un risque de dégradation des joints dudit bras de transmission.

Les figures des dessins illustrent les résultats obtenus par la mise en oeuvre d'une machine enjambeuse attelable réalisée selon l'invention.

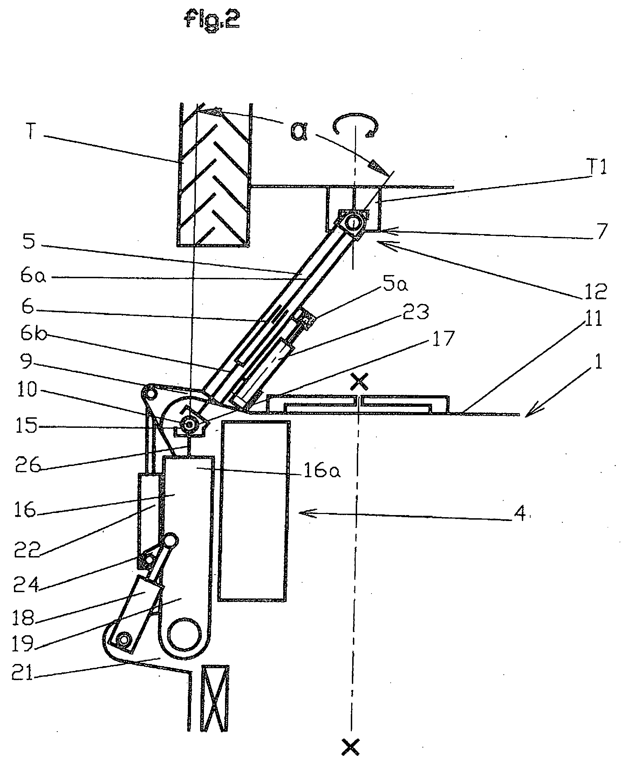

Sur les figures 1-2, l'ensemble tracteur T-machine tractée 1 est représenté en position de déplacement sur une portion de route rectiligne ou autre surface plane. Dans cette situation, la machine tractée se trouve alignée avec le tracteur. Le timon 5 et le bras de transmission à joints de Cardan 6 sont inclinés selon un angle α par rapport à l'axe X-X de la machine. Dans ce cas, le bras de transmission 6 se trouve disposé au-dessus du timon 5.

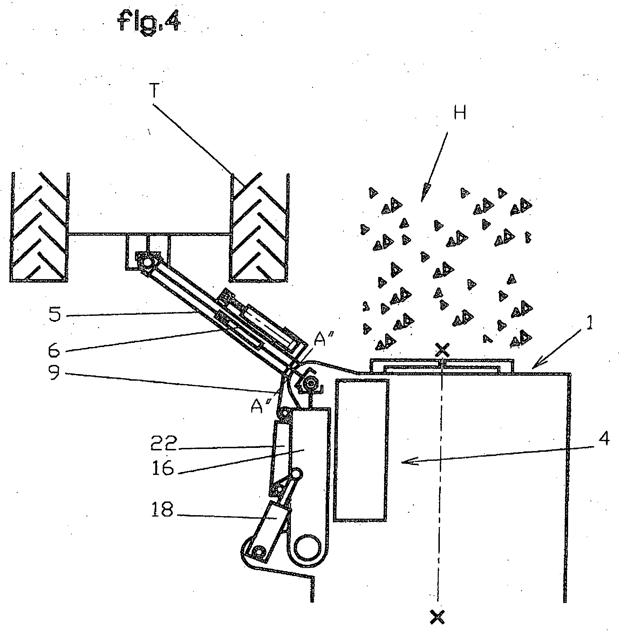

Sur les figures 3-4, l'ensemble tracteur T-machine tractée 1 est représenté en position de déplacement dans une plantation, en chevauchant une haie fruitière H, aucune fonction de la machine 1 n'est activée, cette dernière se trouve déportée par rapport au tracteur T qui circule dans l'inter-rangs I bordant ladite haie fruitière. Le timon 5 et le bras de transmission à joints de Cardan 6 sont inclinés selon un angle β par rapport à l'axe X-X de la machine, le bras de transmission 6 se trouve encore disposé au-dessus du timon 5.

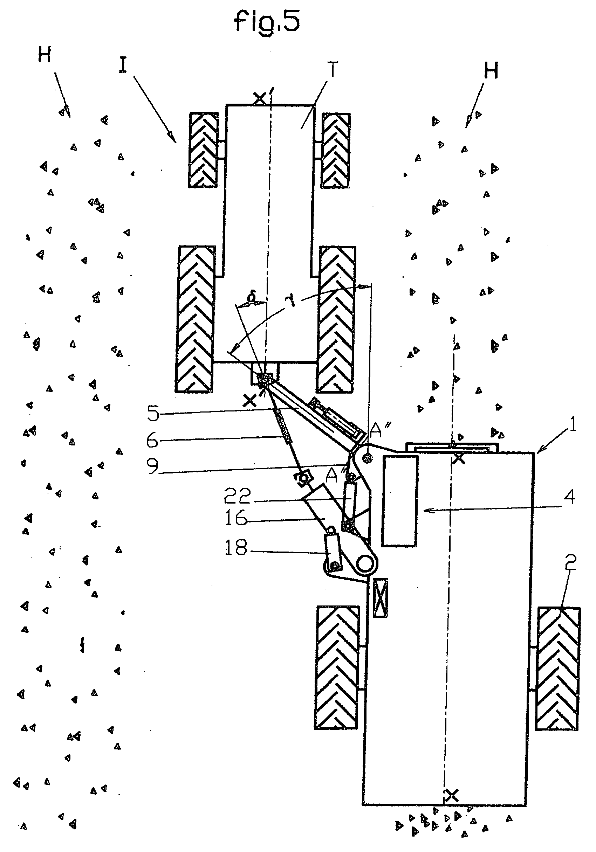

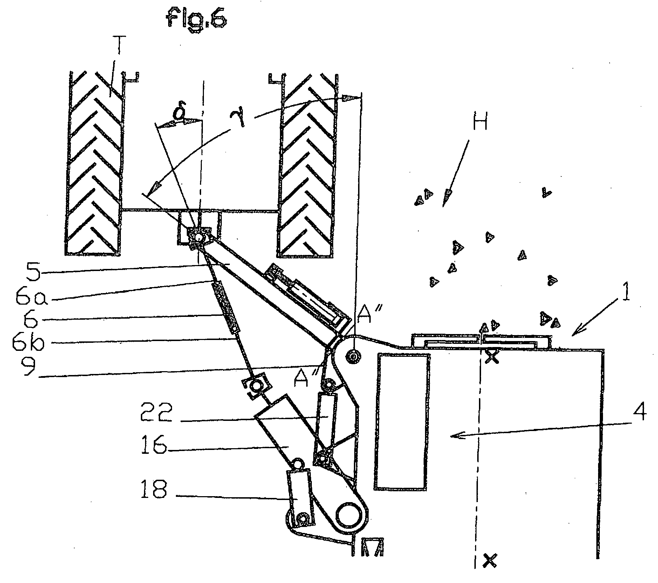

Sur les figures 5-6, l'ensemble tracteur T-machine tractée 1 est représenté en position de déplacement dans une plantation, la machine 1 enjambe une haie fruitière H. Le timon 5 est incliné suivant un axe γ par rapport à l'axe X-X de la machine tractée, tandis que le bras de transmission à joints de Cardan 6 est incliné selon un angle δ. La valeur de l'angle γ étant nettement supérieure à celle de l'angle δ. Autrement dit, la valeur de l'angle δ est très nettement inférieure à celle de l'angle γ.

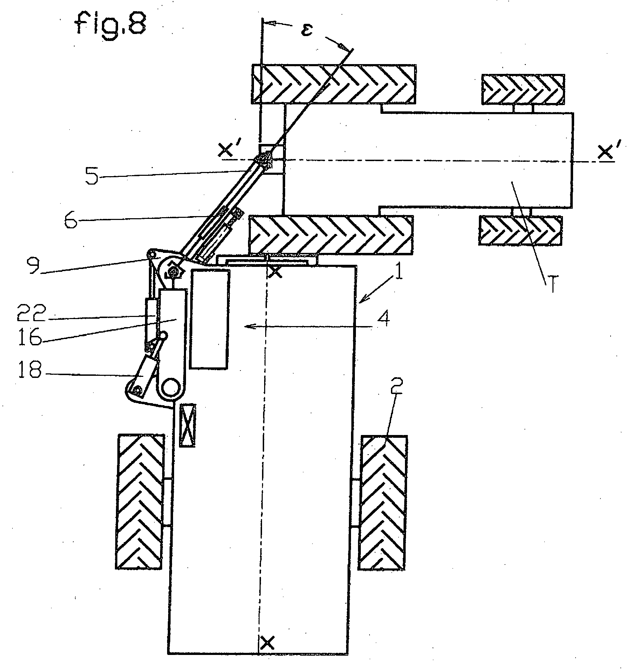

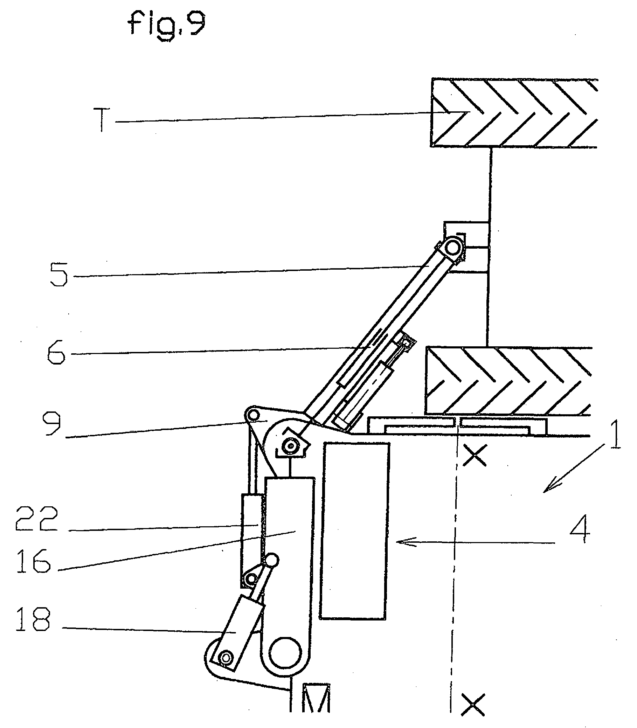

Selon les figures 8-9, l'ensemble tracteur T-machine tractée 1 est montré en position de changement de direction en virage à droite, par exemple en bout de rang. Le timon 5 et le bras de transmission à joints de Cardan 6 sont inclinés suivant un angle ε par rapport à l'axe de la machine tractée.

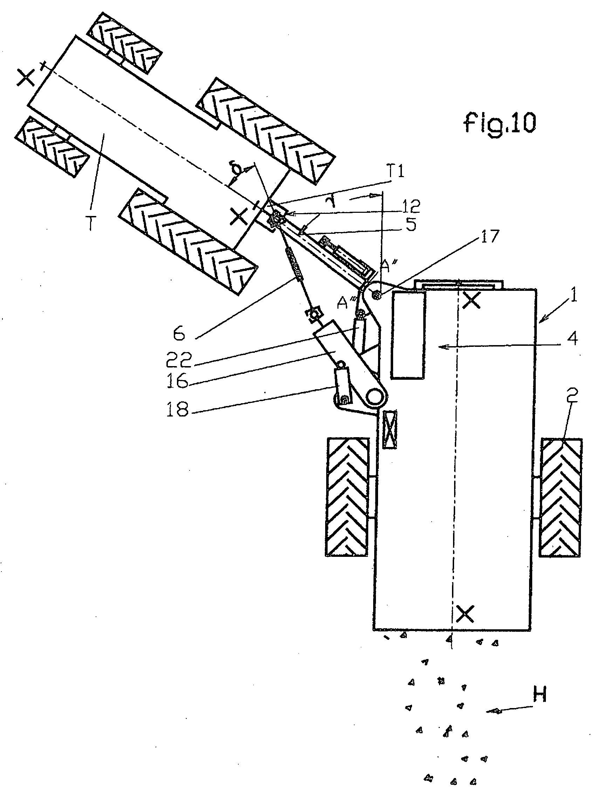

Selon la figure 10, l'ensemble tracteur T-machine tractée 1 est montré en position de changement de direction en virage à gauche. Le tracteur est dans une position telle que son axe X'-X' forme un angle avec l'axe X-X de la machine. Les différents dispositifs de la machines étant encore activés, on remarque que le groupe pompe-multiplicateur est sorti de telle sorte que le timon 5 est incliné suivant un angle γ par rapport à l'axe de la machine tractée, tandis que le bras de transmission à joints de Cardan 6 est incliné suivant un angle δ, inférieur à γ. Dans cette situation, on remarque que la roue arrière gauche du tracteur est sur le point de toucher le bras de transmission à joints de Cardan 6, ce qui empêche le tracteur de s'engager dans des virages en épingle.

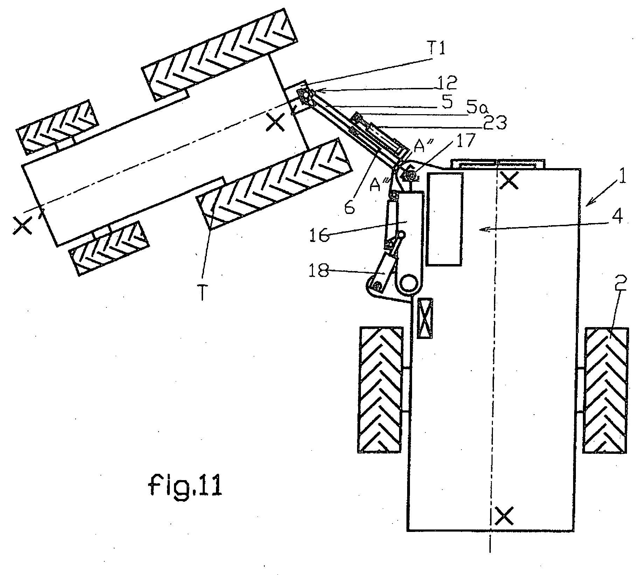

Pour pouvoir s'engager dans de tels virages, l'utilisateur arrête toutes les fonctions de la machines. Ainsi, le système de gestion électronique et le microprocesseur asservissent l'inclinaison du groupe pompe-multiplicateur 16 de la centrale hydraulique 4, à la nouvelle inclinaison du timon détectée par ledit capteur 17 et au fait qu'aucune puissance n'est plus absorbée par les dispositifs équipant la machine, de sorte que le timon 5 et le bras de transmission à joints de Cardan 6 soient alignés (figure 11).

Selon un important avantage de l'invention, l'angle d'inclinaison du bras de transmission 6 est toujours au plus égal ou le plus souvent nettement inférieur à l'angle d'inclinaison du timon d'attelage 5, quelles que soient les positions relatives de la machine tractée et de l'engin tracteur et les grandeurs de la puissance énergétique utilisée pour le fonctionnement optimum des organes actifs de ladite machine.

## Revendications

1. Machine tractée constituée d'une unité de travail (1) montée sur une ou plusieurs roues (2), une ou plusieurs de ces roues pouvant être motrices, et comprenant un équipement dédié à l'accomplissement d'une tâche spécifique, et une source de puissance énergétique (4) fournissant la puissance énergétique pour faire fonctionner les organes actifs dudit équipement, ladite machine comportant encore un dispositif d'attelage comprenant un timon (5) destiné à être relié à l'arrière d'un engin tracteur (T) et une transmission (6) reliée à ladite source de puissance énergétique (4) et dont l'extrémité avant est destinée à être accouplée à la prise de force dudit engin tracteur, **caractérisée en ce que** ladite transmission (6) est constituée par un unique bras de transmission télescopique homocinétique à joints universels, l'arbre (26) reliant l'extrémité postérieure (15) dudit bras de transmission (6) à l'axe d'entrée de la source de puissance énergétique (4) est monté avec une inclinaison ou possibilité de mouvements angulaires variable(s) et d'amplitude limitée.

2. Machine tractée selon la revendication 1, **caractérisée par** un agencement dudit dispositif d'attelage (5, 6) suivant lequel l'inclinaison du bras de transmission (6) télescopique homocinétique à joints universels est assujettie à la position angulaire du timon (5) et à la puissance consommée par les organes actifs de la machine, au moyen d'un système d'asservissement configuré pour que, lorsque la machine (1) est attelée à l'engin tracteur (T) et en cours de fonctionnement, l'angle maximum d'inclinaison possible du bras de transmission (δ) soit très nettement inférieur à l'angle maximum d'inclinaison (γ) possible du timon (5).

3. Machine tractée selon l'une quelconque des revendications 1 ou 2, **caractérisée en ce que** l'axe d'entrée de la source de puissance énergétique est monté avec une aptitude de pivotement autour d'un axe vertical (A-A).

4. Machine tractée selon l'une quelconque des revendications 1 à 3, **caractérisée en ce qu'**elle comporte des moyens permettant de limiter la valeur angulaire de l'inclinaison du bras de transmission (6) relativement à l'inclinaison du timon (5).

5. Machine tractée selon l'une quelconque des revendications 1 à 4, **caractérisée en ce que** les points de pivot du bras de transmission (6) coïncident sensiblement avec les points d'accrochage du timon (5), d'une part, à l'extrémité arrière du tracteur (T), et, d'autre part, à la partie avant du châssis (11) de la machine (1).

6. Machine tractée selon l'une quelconque des revendications 1 à 5, dont les organes actifs sont constitués par des dispositifs à fonctionnement hydraulique, **caractérisée en ce que** la source de puissance énergétique est constituée par une centrale hydraulique comportant un groupe pompe-multiplicateur (16).

7. Machine tractée selon l'une quelconque des revendications 1 à 5, dont les organes actifs sont constitués par des dispositifs à fonctionnement électrique, **caractérisée en ce que** la source de puissance énergétique est constituée par un alternateur.

8. Machine tractée selon l'une des revendications 6 ou 7, **caractérisée en ce que** la source de puissance énergétique comprend une centrale hydraulique et un alternateur électrique.

9. Machine tractée selon l'une quelconque des revendications 1 à 8, **caractérisée en ce qu'**elle comporte un système de gestion électronique configuré pour gérer l'asservissement de l'inclinaison de la source de puissance énergétique, en fonction de l'inclinaison du timon (5) détectée par un capteur angulaire (17) et des puissances absorbées par les différents organes actifs de la machine.

10. Machine tractée selon la revendication 9, **caractérisée en ce que** le système de gestion électronique comprend au moins une unité de traitement numérique associée à des circuits annexes permettant de commander la rotation du groupe pompe-multiplicateur (16) autour de son axe de pivotement lié au châssis de la machine, de sorte à maintenir le bras de transmission (6) dans les plages angulaires autorisées pour son fonctionnement en fonction de la position angulaire du timon (5) et de la puissance utilisée par les dispositifs en fonctionnement sur la machine.

11. Machine tractée selon l'une des revendications 9 ou 10, **caractérisée en ce que** le système de gestion électronique est configuré pour :
- assurer la superposition ou le parallélisme du timon d'attelage 5 et du bras de transmission (6), lorsque les axes du tracteur (T) et de la machine (1) sont alignés, ou lorsque les axes dudit tracteur et de ladite machine sont espacés et parallèles mais que les organes actifs de cette dernière ne fonctionnent pas ou utilisent une puissance énergétique faible ;
- assurer le maintien du bras de transmission (6) dans une position d'inclinaison réduite selon un angle inférieur à l'angle d'inclinaison du timon d'attelage (5), lorsque les axes du tracteur (T) et de la machine (1) sont espacés et parallèles et que les organes actifs de cette dernière fonctionnent en utilisant une puissance énergétique importante ;
- replacer le bras de transmission (6) dans l'axe du timon (5) lorsque la puissance totale utilisée par les dispositifs actifs de la machine (1) redevient nulle ou suffisamment réduite, pour ne pas favoriser un risque de dégradation des joints dudit bras de transmission.

12. Machine tractée selon l'une quelconque des revendications 9 à 11, **caractérisée en ce que** le timon (5) est relié à la partie avant du châssis de la machine avec une possibilité de pivotement autour de deux axes perpendiculaires (A'-A') (A"-A"), et **en ce que** les mouvements de pivotement du timon (5) sont assurés, d'une part, par l'intermédiaire d'un premier actionneur (22) et, d'autre part, par l'intermédiaire d'un deuxième actionneur (23).

13. Machine tractée selon la revendication 12, **caractérisée en ce que** le timon (5) est relié à la machine (1) par l'intermédiaire d'un support en forme de U basculé ou de fourche (9), lequel est monté avec une aptitude de pivotement autour d'un axe vertical.

14. Machine tractée selon l'une quelconque des revendications 2 à 13, **caractérisée en ce que** le système d'asservissement de l'inclinaison du bras de transmission (6) à l'inclinaison du timon (5), comprend au moins un capteur angulaire (17) permettant de détecter l'inclinaison dudit timon et au moins un actionneur (18) permettant d'incliner ledit bras de transmission (6) en fonction des informations fournies par ledit capteur et des puissances absorbées par les différents organes actifs de la machine.

15. Machine tractée selon l'une quelconque des revendications 1 à 14, **caractérisée en ce que** la source de puissance énergétique est montée sur un support (19) pivotant autour d'un axe vertical et les mouvements de pivotement de ce support, à droite ou à gauche, dans le plan horizontal, sont assurés par un actionneur (18).

16. Machine tractée selon l'une quelconque des revendications 12 à 15, **caractérisée en ce que** le premier actionneur (22) est constitué par un vérin hydraulique relié au support pivotant et à une pièce d'attache fixe de la machine, et **en ce que** le deuxième actionneur (23) est constitué par un vérin hydraulique, relié audit support pivotant et à une attache dont est muni ledit timon dans sa partie intermédiaire.

## Patentansprüche

1. Anhänger bestehend aus einer Arbeitseinheit (1), die auf einem oder mehreren Rädern (2) montiert ist, wobei eines oder mehrere dieser Räder eine Antriebsfunktion haben können, und die mit einer Ausrüstung zur Ausführung einer spezifischen Aufgabe, sowie mit einer Energieleistungsquelle (4) ausgestattet ist, welche die Energieleistung liefert, um den Betrieb der aktiven Elemente der Ausrüstung sicherzustellen, wobei der Hänger außerdem mit einer Anspannenvorrichtung mit einer Deichsel (5) ausgestattet ist, die dazu bestimmt ist, mit dem Heck einer Zugmaschine (T) und einem Getriebe (6) verbunden zu werden, das an die Energieleistungsquelle (4) angeschlossen wird und dessen vorderes Ende zum Ankoppeln an die Zapfwelle der Zugmaschine bestimmt ist, **dadurch gekennzeichnet, dass** das Getriebe (6) aus einem einzigen homokinetischen Teleskop-Getriebearm mit Universaldichtungen besteht, wobei die Welle (26), die das hintere Ende (15) des Getriebearms (6) mit der Eingangsachse der Energieleistungsquelle (4) verbindet, schräg montiert ist oder Bewegungen in verschiedenen Winkeln und von begrenztem Ausmaß zulässt.

2. Anhänger nach Anspruch 1, **dadurch gekennzeichnet, dass** die Anspannenvorrichtung (5, 6) so angeordnet ist, dass die Neigung des homokinetischen Teleskop-Getriebearms mit Universaldichtungen (6) von der Winkelposition der Deichsel (5) und der Leistungsaufnahme der aktiven Elemente des Hängers abhängig ist und zwar durch ein Regelungssystem, das so konfiguriert ist, dass der maximal mögliche Neigungswinkel des Getriebearms (δ) während der Hänger (1) an die Zugmaschine (T) angekoppelt und in Betrieb ist, sehr deutlich unter dem maximal möglichen Neigungswinkel (γ) der Deichsel (5) liegt.

3. Anhänger nach einem der Ansprüche 1 oder 2, **dadurch gekennzeichnet, dass** die Eingangsachse der Energieleistungsquelle so montiert ist, dass sie sich um eine vertikale Achse (A-A) drehen kann.

4. Anhänger nach einem der Ansprüche 1 bis 3, **dadurch gekennzeichnet, dass** dieser Mittel enthält, die es ermöglichen, den Wert des Neigungswinkels des Getriebearms (6) gegenüber der Neigung der Deichsel (5) zu beschränken.

5. Anhänger nach einem der Ansprüche 1 bis 4, **dadurch gekennzeichnet, dass** die Schwenkpunkte des Getriebearms (6) eindeutig mit den Ankopplungspunkten der Deichsel (5) einerseits am hinteren Ende der Zugmaschine (T) und andererseits im vorderen Teil des Rahmens (11) des Hängers (1) kongruent sind.

6. Anhänger nach einem der Ansprüche 1 bis 5, dessen aktive Elemente aus hydraulisch betriebenen Vorrichtungen bestehen, **dadurch gekennzeichnet, dass** die Energieleistungsquelle aus einem hydraulischen Antriebsaggregat besteht, das eine Verstärkerpumpengruppe (16) umfasst.

7. Anhänger nach einem der Ansprüche 1 bis 5, dessen aktive Elemente aus elektrisch betriebenen Vorrichtungen bestehen, **dadurch gekennzeichnet, dass** die Energieleistungsquelle aus einem Wechselstromgenerator besteht.

8. Anhänger nach einem der Ansprüche 6 oder 7, **dadurch gekennzeichnet, dass** die Energieleistungsquelle ein hydraulisches Antriebsaggregat und einen Wechselstromgenerator umfasst.

9. Anhänger nach einem der Ansprüche 1 bis 8, **dadurch gekennzeichnet, dass** er ein elektronisches Leitsystem umfasst, das konfiguriert ist, um die Abhängigkeit der Neigung der Energieleistungsquelle von der Neigung der Deichsel (5), die durch einen Winkelsensor (17) ermittelt wird, sowie von den Leistungsaufnahmen der verschiedenen aktiven Elemente des Hängers zu steuern.

10. Anhänger nach Anspruch 9, **dadurch gekennzeichnet, dass** das elektronische Leitsystem mindestens eine digitale Verarbeitungseinheit umfasst, die mit angrenzenden Schaltungen verbunden ist, welche die Steuerung der Rotation der Verstärkerpumpengruppe (16) um ihre Drehachse, die mit dem Rahmen des Hängers verbunden ist, ermöglichen, um dadurch den Getriebearm (6) innerhalb der für seinen Betrieb zulässigen Neigungsbereiche in Abhängigkeit von der Winkelposition der Deichsel (5) und von der Leistungsaufnahme der auf dem Hänger in Betrieb befindlichen Vorrichtungen zu halten.

11. Anhänger nach einem der Ansprüche 9 oder 10, **dadurch gekennzeichnet, dass** das elektronische Leitsystem konfiguriert ist, um:
- das Übereinanderliegen bzw. die Parallelität der Anhängerdeichsel 5 und des Getriebearms (6) sicherzustellen, wenn die Achsen der Zugmaschine (T) und des Hängers (1) gefluchtet sind, oder wenn die Achsen der Zugmaschine und des Hängers in einem gewissen Abstand und parallel zueinander liegen, wobei jedoch die aktiven Elemente des letzteren nicht in Betrieb sind oder nur eine geringe Energieleistung aufnehmen;
- das Halten des Getriebearms (6) in einer verringerten Neigungsposition entsprechend eines Winkels sicherzustellen, der kleiner als der Neigungswinkel der Anhängerdeichsel (5) ist, wenn die Achsen der Zugmaschine (T) und des Hängers (1) in einem gewissen Abstand und parallel zueinander liegen, und wenn die aktiven Elemente des letzteren in Betrieb sind und dabei eine erhebliche Energieleistung aufnehmen;
- den Getriebearm (6) wieder in der Achse der Deichsel (5) zu positionieren, wenn die Gesamtleistungsaufnahme der aktiven Vorrichtungen des Hängers (1) wieder auf Null zurückgeht oder ausreichend weit zurückgeht, um das Risiko einer Beschädigung der Dichtungen des Getriebearms nicht zu begünstigen.

12. Anhänger nach einem der Ansprüche 9 bis 11, **dadurch gekennzeichnet, dass** die Deichsel (5) mit dem vorderen Teil des Rahmens des Hängers verbunden ist, wobei das Drehen um zwei senkrechte Achsen (A'-A') (A"-A") möglich ist, und dass die Drehbewegungen der Deichsel (5) einerseits über ein erstes Stellglied (22) und andererseits über ein zweites Stellglied (23) sichergestellt werden.

13. Anhänger nach Anspruch 12, **dadurch gekennzeichnet, dass** die Deichsel (5) über eine Halterung in Form eines umgekippten U oder einer Gabel (9), die so montiert ist, dass sie sich um eine vertikale Achse drehen kann, mit dem Hänger (1) verbunden ist.

14. Anhänger nach einem der Ansprüche 2 bis 13, **dadurch gekennzeichnet, dass** das System zur Regelung der Neigung des Getriebearms (6) in Abhängigkeit von der Neigung der Deichsel (5) zumindest einen Winkelsensor (17) umfasst, der es ermöglicht, die Neigung der Deichsel zu ermitteln, und zumindest ein Stellglied (18) umfasst, das es ermöglicht, den Getriebearm (6) in Abhängigkeit von den Informationen, die der Sensor liefert, und von den Leistungsaufnahmen der verschiedenen aktiven Elemente des Hängers zu neigen.

15. Anhänger nach einem der Ansprüche 1 bis 14, **dadurch gekennzeichnet, dass** die Energieleistungsquelle auf einer Halterung (19) montiert ist, die sich um eine vertikale Achse dreht, und die Drehbewegungen dieser Halterung nach rechts oder links auf der horizontalen Ebene durch ein Stellglied (18) sichergestellt werden.

16. Anhänger nach einem der Ansprüche 12 bis 15, **dadurch gekennzeichnet, dass** das erste Stellglied (22) ein Hydraulikzylinder ist, der mit der drehenden Halterung und mit einem fixen Befestigungsteil des Hängers verbunden ist, und dass das zweite Stellglied (23) ein Hydraulikzylinder ist, der mit der drehenden Halterung und mit einer Befestigungsvorrichtung verbunden ist, mit der die Deichsel in ihrem Zwischenteil ausgestattet ist.

## Claims

1. Towed machine consisting of a working unit (1) mounted on one or more wheels (2), where one or more of the said wheels may be driving wheels, and comprising a device dedicated to the accomplishment of a specific task, and a power source (4) supplying the power to operate the active members of the said device, the said machine further comprising a hitching device comprising a beam (5) intended to be linked to the rear of a tractor (T) and a transmission (6) linked to the said power source (4) and whose forward end is intended to be coupled to the power takeoff of the said tractor, **characterised in that** the said transmission (6) consists of a single telescopic constant-velocity universal-joint transmission arm, and **in that** the shaft (26) linking the rear end (15) of the said transmission arm (6) to the input shaft of the power source (4) is fitted with an angle of inclination or with the possibility of variable angular movement(s) of limited amplitude.

2. Towed machine according to claim 1, **characterised by** a layout of the said hitching device (5, 6) in which the angle of inclination of the telescopic constant-velocity universal-joint transmission arm (6) is slaved to the angular position of the beam (5) and the power consumed by the active members of the machine, by means of a control system configured so that, when the machine (1) is hitched to the tractor (T) and operating, the maximum possible angle of inclination of the transmission arm (6) is very distinctly less than the maximum possible angle of inclination (y) of the beam (5).

3. Towed machine according to any one of claims 1 or 2, **characterised in that** the input shaft of the power source is fitted with the ability to pivot about a vertical axis (A-A).

4. Towed machine according to any one of claims 1 to 3, **characterised in that** it comprises means allowing limitation of the angular value of inclination of the transmission arm (6) relative to the angle of inclination of the beam (5).

5. Towed machine according to any one of claims 1 to 4, **characterised in that** the pivot points of the transmission arm (6) essentially coincide with the coupling points of the beam (5), respectively at the rear end of the tractor (T) and at the front portion of the chassis (11) of the machine (1).

6. Towed machine according to any one of claims 1 to 5, whose active members consist of hydraulically operated devices, **characterised in that** the power source consists of a hydraulic unit comprising a multiplier pump unit (16).

7. Towed machine according to any one of claims 1 to 5, whose active members consist of electrically operated devices, **characterised in that** the power source consists of an alternator.

8. Towed machine according to any one of claims 6 or 7, **characterised in that** the power source comprises a hydraulic unit and an electrical alternator.

9. Towed machine according to any one of claims 1 to 8, **characterised in that** it comprises an electronic management system configured to manage the slaving of the angle of inclination of the power source, according to the angle of inclination of the beam (5) detected by an angle sensor (17) and the power absorbed by the various active members of the machine.

10. Towed machine according to claim 9, **characterised in that** the electronic management system comprises at least one digital processing unit linked to associated circuits allowing control of the rotation of the multiplier pump unit (16) about its axis of pivoting linked to the chassis of the machine, so as to maintain the transmission arm (6) in the permitted ranges of angles for its operation according to the angular position of the beam (5) and the power used by the devices working on the machine.

11. Towed machine according to any one of claims 9 or 10, **characterised in that** the electronic management system is configured to:
- ensure the superposition or parallelism of the hitching beam 5 and the transmission arm (6), when the axes of the tractor (T) and of the machine (1) are aligned with each other, or when the axes of the said tractor and of the said machine are spaced and parallel but the active members of the said machine are not operating or are using a small amount of power;
- ensure the maintenance of the transmission arm (6) in a position of reduced inclination at an angle smaller than the angle of inclination of the hitching beam (5), when the axes of the tractor (T) and of the machine (1) are spaced and parallel and the active members of the said machine are operating and using a large amount of power;
- replace the transmission arm (6) in the axis of the beam (5) when the total power used by the active members of the machine (1) becomes zero or sufficiently small not to favour a risk of degradation of the joints of the said transmission arm.

12. Towed machine according to any one of claims 9 to 11, **characterised in that** the beam (5) is connected to the front portion of the chassis of the machine with the ability to pivot about two perpendicular axes (A-A') (A"-A"), and **in that** the pivoting movements of the beam (5) are brought about by a first actuator (22) and a second actuator (23).

13. Towed machine according to claim 12, **characterised in that** the beam (5) is connected to the machine (1) via an in cross-section U-shaped or forked bracket (9), which is fitted with the ability to pivot about a vertical axis.

14. Towed machine according to any one of claims 2 to 13, **characterised in that** the system for slaving the angle of inclination of the transmission arm (6) to the angle of inclination of the beam (5) comprises at least one angle sensor (17) allowing detection of the angle of inclination of the said beam and at least one actuator (18) allowing the said transmission arm (6) to be inclined according to the information supplied by the said sensor and the power absorbed by the various active members of the machine.

15. Towed machine according to any one of claims 1 to 14, **characterised in that** the power source is mounted on a bracket (19) pivoting about a vertical axis and the pivoting movements of the said bracket, to the left or to the right, in the horizontal plane, are brought about by an actuator (18).

16. Towed machine according to any one of claims 12 to 15, **characterised in that** the first actuator (22) consists of a hydraulic jack connected to the pivoting bracket and to a fixed attachment point on the machine, and **in that** the second actuator (23) consists of a hydraulic jack connected to the said pivoting bracket and to an attachment point provided on the said beam in its middle portion.
